# EUROPÄISCHE PATENTSCHRIFT

(11) **EP 0 645 923 B1**
(45) Veröffentlichungstag und Bekanntmachung des Hinweises auf die Patenterteilung: **09.05.2001**
(21) Anmeldenummer: 94114165.7
(22) Anmeldetag: 08.09.1994
(51) Int. Cl.: H04M 3/50

(54) **Broadcastverfahren zum gleichzeitigen Vermitteln einer Ansage an mehrere Teilnehmer eines Kommunikationssystems**
Broadcast method for simultaneously connecting an announcement with plural subscribers of a communication system
Méthode de diffusion pour connecter simultanément une annonce à plusieurs abonnés d'un système de communication

(30) Priorität: 24.09.1993 DE 4332637
(43) Veröffentlichungstag der Anmeldung: 29.03.1995
(73) Patentinhaber: SIEMENS AKTIENGESELLSCHAFT, 80333 München (DE)
(72) Erfinder: Kreten, Axel, Dipl.-Ing., D-82178 Puchheim (DE); Leutner, Klaus, Dipl.-Ing., D-82008 Unterhaching (DE)

(56) Entgegenhaltungen:
- FR-A- 2 578 373
- FR-A- 2 588 436
- US-A- 3 673 344
- US-A- 4 357 493
- PATENT ABSTRACTS OF JAPAN vol. 15, no. 465 (E-1138) 26. November 1991 & JP-A-03 201 855 (FUJITSU LTD) 3. September 1991
- PATENT ABSTRACTS OF JAPAN vol. 17, no. 456 (E-1418) 20. August 1993 & JP-A-05 103 100 (FUJITSU LTD) 23. April 1993
- TELCOM REPORT, Bd.10, Nr.1, Januar 1987, MUNCHEN DE Seiten 18 - 22 HORST BECKH 'VERMITTLUNGSTECHNISCHE EWSD-TEILNEHMERLEISTUNGSMERKMALE'

## Beschreibung

In Kommunikationssystemen sind folgende zwei Verfahren zum Vermitteln von Ansagen mit festem Ansagetext (Standardansagen) bekannt. Bei dem einen Verfahren werden Ansagen ohne zeitgerechten Einsatz im Broadcast-Verfahren vermittelt. Hierbei sind mehrere Teilnehmer mit demselben Ansage-Port verbunden. Bis zu einer vorgebbaren maximalen Anzahl werden weitere Teilnehmer entsprechend dem Einfall der Verbindung beliebig der laufenden Ansage zugeschaltet. Die maximale Anhördauer wird je Ansageverbindung über eine Gesprächszeitbegrenzung realisiert.

Das andere Verfahren wird ohne Broadcasting betrieben. Hierbei ist immer nur ein einziger Teilnehmer mit einem Ansage-Port verbunden. Die Ansage wird mit der Belegung des Ansage-Ports gestartet. Dadurch hört der Teilnehmer die Ansage immer von Beginn an. Die Anhörzeit kann eine bestimmte Anzahl kompletter Ansagedurchläufe betragen.

Aus dem Dokument US-A-3 673 344 ist ein Verfahren zum Vermitteln einer Ansage an mehrere Teilnehmer eines Kommunikationssystems bekannt, nach dem einem Ansage-Port ein Sammelzeitraum zugeordnet ist, wobei während dieses Sammelzeitraumes einfallende Verbindungsanforderungen für die gemeinsame Durchschaltung (Broadcasting) zu diesem Ansage-Port gesammelt werden. Die Länge des Sammelzeitraumes entspricht dabei der Länge der Ansage, so daß die maximale Wartezeit für eine Verbindungsanforderung der Länge der Ansage entspricht.

Aus den Dokumenten FR-A-2 578 373 und JP-A-03 201 855 (abstract) sind ebenfalls Verfahren zum Vermitteln einer Ansage an mehrere Teilnehmer eines Kommunikationssystems bekannt.

Der Erfindung liegt die Aufgabe zugrunde, die Verbindungsanforderungen zu einer Ansage so durchzuschalten, daß jeder Teilnehmer die Ansage von Beginn an hört, ohne daß die maximale Wartezeit einer Verbindungsanforderung der Länge der Ansage entspricht.

Diese Aufgabe wird durch die Merkmale des Anspruchs 1 gelöst.

Eine weitere Ausführungsform der Erfindung ist durch Anspruch 3 angegeben. Durch diese Ausführungsform wird die maximale Wartezeit eines Teilnehmers bei einer Ansageanforderung entsprechend der Zahl der vorhandenen Ansage-ports verringert.

Eine weitere Ausführungsform der Erfindung ist durch Anspruch 6 angegeben. Durch diese Ausführungsform ist gewährleistet, daß bei einem Vermittlungssystem der vorgegebene Art Meldungs-Bursts aufgrund mehrerer gleichzeitiger Durchschaltaufträge zu den an einer Durchschaltung zu einem Ansage-Port beteiligten Gruppenprozessoren zum Durchschaltzeitpunkt vermieden werden.

Im folgenden wird ein Ausführungsbeispiel der Erfindung anhand der Zeichnung näher beschrieben.

Figur 1 zeigt die Verbindungsstruktur in einem Vermittlungssystem bei einer Ansage nach dem Broadcast Verfahren.

Figur 2 zeigt den zeitlichen Ablauf beim Broadcasting von Ansageverbindungen mit zeitgerechter Durchschaltung.

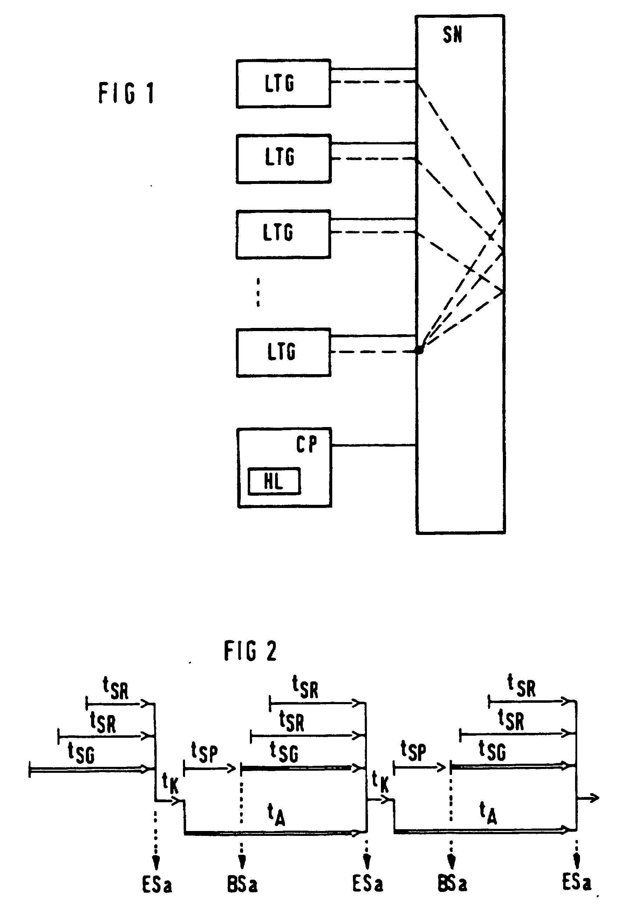

Das Vermittlungssystem nach Figur 1 besitzt ein zentrales Koppelnetz SN, das von einem Koordinationsprozessor CP gesteuert wird. An das Koppelnetz SN sind mehrere Anschlußgruppen LTG angeschlossen, die die Schnittstelle von Teilnehmerleitungs-Ports, Verbindungsleitungs-Ports, sowie Service-Ports (z.B. Ansage-Ports) zu dem zentralen Koppelnetz bilden. Die Anschlußgruppen LTG werden von einem Gruppenprozessor GP eigenständig gesteuert und verfügen über eine absolute Uhrzeit. Diese eigenständige Uhr eines Gruppenprozessors GP wird jede Nacht von dem zentralen Koordinationsprozessor CP synchronisiert. Die Uhren laufen mit hoher Genauigkeit (Präzision), sind aber nur bedingt genau einstellbar (Accuracy). Diese bedingt genaue Einstellbarkeit ergibt sich wegen des Sekundenzeitrasters und wegen der Laufzeiten der Sychronisationsbefehle vom Koordinationsprozessor zum Gruppenprozessor. Die Uhren der

Gruppenprozessoren gehen daher in der Größenordnung bis ca. 2 sec nach (nie vor !). Ein Fehler von maximal einer Sekunde entsteht durch das Sekundenzeitraster und erscheint bei allen Anschlußgruppen in gleicher Größe. Ein weiterer Fehler von maximal einer Sekunde entsteht durch Laufzeiten der Synchronisationsbefehle. Dies führt zu Zeitdifferenzen zwischen den Uhren der verschiedenen Anschlußgruppen. Die Differenz zwischen zwei Anschlußgruppen überschreitet jedoch einen maximalen Fehler von einer Sekunde nicht, da unter den Anschlußgruppen nur der durch die Laufzeit der Synchronisationsbefehle bedingte Fehler eingeht. Damit läßt sich zum Mitteilen des Durchschaltezeitpunktes der Ansagen auf der Verbindungsseite der Teilnehmer, d. h. in den Anschlußgruppen der Teilnehmer, die absolute Uhrzeit der Ansage-Anschlußgruppe verwenden.

Um beim erfindungsgemäßen Broadcasting von Ansageverbindungen die Ansage zeitgerecht einsetzen lassen zu können, müssen die Verbindungsanforderungen zu Ansagen immer für eine bestimmte Zeit gesammelt werden, bevor sie im Broadcastverfahren zu einem Ansage-Port durchgeschaltet werden.

Figur 2 zeigt den zeitlichen Ablauf des erfindungsgemäßen Broadcast-Verfahrens. Hierbei müssen mehrere Zeiträume unterschieden werden. Zunächst eine Gesamtsammelzeit t_{SG}, die der maximalen Wartezeit auf eine bestimmte Ansage entspricht. Diese Gesamtsammelzeit t_{SG} wird der Anschlußgruppe, die die zu der genannten Ansage vorhandenen Ansage-Ports umfaßt, durch Administration bekanntgemacht. Sodann eine Restsammelzeit t_{SR}, die demjenigen Anteil der Gesamtsammelzeit entspricht, der für eine Verbindung von der Anforderung bis zum Ende der Gesamtsammelzeit eines Ansage-Ports verbleibt. Während der Gesamtsammelzeit (Sammelzeitraum) werden Verbindungsanforderungen für einen Ansage-Port gesammelt und diesem zugeteilt, bis die maximal zuteilbare Anzahl von Verbindungen zu einem Ansage-Port (Broadcastfaktor) erreicht ist.

Während des Sammelzeitraums anfallende Verbindungsanforderungen werden in der teilnehmerseitigen (A-seitigen) Anschlußgruppe nicht durchgeschaltet und die zugehörigen Teilnehmer hören den Freiton. Eine außerhalb dieses Sammelzeitraums einfallende Verbindungsanforderung wird einem anderen Ansage-Port zugeteilt, bei dem diese Ansageanforderung in dessen Sammelzeitraum fällt und zwar solage, bis die durch dessen Hörerliste vorgegebene maximale Anzahl von Hörern (Broadcastfaktor) erreicht ist. Ist eine Zuteilung unter diesen Bedingungen nicht möglich, so wird einem Ansage-Port auch eine außerhalb seines Sammelzeitraumes einfallende Ansageanforderung zugeteilt, wenn dessen Hörerliste noch Platz hat. Für diese Ansageanforderung verlängert sich die Restsammelzeit über die Gesamtsammelzeit hinaus. Der zeitgerechte Einsatz bleibt aber auch bei dieser Ansageanforderung erhalten. Der letztgenannte Fall dürfte bei Ansagen, deren bestimmende Daten (Anzahl der Ansage-Ports, Boardcastfaktor, Ansagelänge, Gesamtsammelzeit) richtig aufeinander abgestimmt sind, nur selten auftreten.

An den Sammelzeitraum t_{SG} schließt sich ein Karenzzeitraum t_{K} an. Der Karenzzeitraum soll sicherstellen, daß das Ende des Sammelzeitraums immer vor Beginn der Ansage liegt, auch wenn die absoluten Uhrzeiten nicht an derselben Stelle im Vermittlungssystem abgemessen werden, und somit der erwähnte Synchronisationsfehler der Anschlußgruppe untereinander berücksichtigt werden muß.

An den Karenzzeitraum schließt sich ein Ansagezeitraum t_{A} (Ansagedauer) an. Der Ansagezeitraum t_{A} entspricht dem Zeitraum ab Start der Ansage bis zum Ende der Ansage, bzw. zwischen Startmeldung und Endemeldung bei dauernd durchlaufenden Ansagen.

Ein Sperrzeitraum t_{SP} entspricht demjenigen Zeitraum, der einerseits innerhalb des Ansagezeitraums liegt und andererseits außerhalb des Sammelzeitraums liegt (t_{SP} + t_{SG} = t_{A}). Einem Ansage-Port mit laufender Ansage werden, abgesehen von dem bereits geschilderten Sonderfall, nur während seinem zugeordneten Sammelzeitraum Verbindungsanforderungen zugeteilt.

Ein Zeitpunkt BSa entspricht dem Zeitpunkt am Beginn/Wiederbeginn eines Sammelzeitraums. Ein Zeitpunkt ESa entspricht dem Zeitpunkt am Ende eines Sammelzeitraums.

Im folgenden wird der Ablauf beim Aufbau einer erfindungsgemäßen Broadcast-Verbindung näher erläutert. Dabei kann ein Vergleich mit dem Ablauf beim Aufbau einer normalen Zweierverbindung nützlich sein. Für eine ausführliche Darstellung des Ablaufs beim Aufbau einer normalen Zweierverbindung bei einer Vermittlungssystem-Struktur gemäß Figur 1 wird auf das Buch "Digitale Kommunikationsnetze" von Peter R. Gerke, Springer-Verlag Berlin, 1991 (Seiten 187 bis 190) verwiesen.

Zunächst wird eine Belegung im "eingeschwungenen Zustand" des erfindungsgemäßen Ansagesystems betrachtet. Hiermit ist gemeint, daß alle Ansage-Ports eines Ansagebündels (Ansage-Ports mit gleicher Ansage) aktiv sind (d. h. die Ansagen liegen am Ansage-Port an), und daß die zu einem Ansagebündel gehörenden Ansage-Ports bezüglich ihres Ansagebeginns zeitlich so gerastert sind, daß Anforderungen mit minimaler Wartezeit durchgeschaltet werden können (siehe weiter unten!). Dieser "eingeschwungene Zustand" eines Ansagebündels bleibt unabhängig davon bestehen, ob zu einem aktiven Ansage-Port eines solchen Bündels Verbindungen durchgeschaltet sind oder nicht.

Im eingeschwungenen Zustand senden die Ansage-Anschlußgruppen nach jeder Periode der Ansagedauer an den Koordinationsprozessor die Meldungen M:ESa (Beginn der Sammelzeit) und M:ESa (Ende der Sammelzeit). Die Meldung M:BSa enthält jeweils die aktuelle Ansage-Anhördauer und den absoluten Zeitpunkt ESa, zu dem die diesem Ansage-Port zugeteilten Teilnehmer durchgeschaltet werden. Mit dem Empfang der einem bestimmten Ansage-Port zugehörigen Meldung M:BSa beginnt für diesen Ansage-Port der Sammelzeitraum, innerhalb dessen der Koordinationsprozessor neu eintreffendne Ansageanforderungen in die Hörerliste dieses Ansageports einträgt.

Bei einer Ansageanforderung im eingeschwungenen Zustand wird wie folgt verfahren. Zunächst wird die Ansageanforderung in die zugehörige Hörerliste eingetragen und der Weg im Koppelnetz durchgeschaltet. Sodann erhält die A-Seite das Kommando "Durchschalten", welches das Kennzeichen "Broadcast mit zeitgerechtem Einsatz" und die Angabe der im Koordinationsprozessor vorhandenen Zeiten, nämlich den absoluten Durchschaltezeitpunkt und die Ansage-Anhördauer für den zugehörigen Ansage-Port enthält. Die B-Seite (Ansage-Anschlußgruppe) erhält nur dann ein Kommando "Belegen B" (Belegen und Durchschalten), wenn zu einem freien, aktiven Ansage-Port wieder eine erste Verbindung durchgeschaltet wird, damit der Sprachkanal zum Koppelnetz durchgeschaltet werden kann.

Weitere Ansageanforderungen werden ebenso behandelt, bis der Koordinationsprozessor für diese Hörerliste die Meldung "Ende der Sammelzeit" erhält oder die Hörerliste voll ist. Nach dem Eintreten von einer der beiden genannten Bedingungen wählt der Koordinationsprozessor für die nächste Anforderung den nächsten Ansage-Port aus.

Die Anschlußgruppen der auf dieselbe Ansage wartenden Teilnehmer schalten nach Ablauf ihrer jeweiligen Restsammelzeiten den Freiton ab und den Teilnehmer-Port zum Kanal des zentralen Koppelnetzes durch.

Die Anschlußgruppe des Ansage-Ports startet nach Ablauf der Gesamtsammelzeit die Karenzzeit und sendet die Meldung "Ende der Sammelzeit" an den Koordinationsprozessor. Die Karenzzeit neutralisiert die oben erläuterten Differenzen der Uhrzeit zwischen Ansage-Anschlußgruppe und den Anschlußgruppen der A-Seite. Nach Ablauf der Karenzzeit startet die Ansage-Anschlußgruppe die Ansage. Nach Ablauf der Sperrzeit t_{SP} schickt die Ansage-Anschlußgruppe die Meldung "Wiederbeginn der Sammelzeit" an den Koordinationsprozessor.

Um die maximal mögliche Wartezeit eines Teilnehmers auf den Beginn einer Ansage zu verringern, ist eine zeitliche Rasterung der vorhandenen Ansage-Ports mit gleicher Ansage notwendig. Unter dem Begriff "zeitliche Rasterung" wird der zeitlich versetzte Start gleicher Ansagen auf verschiedenen Ansage-Ports verstanden, wodurch bewirkt wird, daß eine Anforderung immer mit einer im Vergleich zur Ansage-Anhörzeit kleinen Wartezeit durchgeschaltet werden kann.

Um diesen Zustand zu erreichen, gibt es drei mögliche Verfahrensweisen.

Eine erste Verfahrensweise besteht darin, daß beim Einschalten und Einrichten einer Ansage-Anschlußgruppe vom Koordinationsprozessor durch eine besondere Start-Meldung an diese Anschlußgruppe der erste Ansage-Port gestartet wird. Diese Start-Meldung enthält als Datum auch die (relative) Sammelzeit, die administrativ vorgegeben wird. Die Ansage-Anschlußgruppe mißt daraufhin die Ansagenlänge (Start-/Stop-Signale der Ansagemaschine) aus und ermittelt daraus die für die Meldungen M:BSa und M:ESa benötigten Zeitdaten. Die Ermittlung dieser Zeitdaten wird weiter unten näher erläutert. Zum Zeitpunkt BSa für den ersten Ansage-Port sendet der Koordinationsprozessor die Start-Meldung an den zweiten Ansage-Port, usw. Ein auf diese Weise gestarteter Ansage-Port bleibt daraufhin immer im aktiven Zustand. Während des Aktivierungsvorganges eintreffende Anforderungen können nur begrenzt behandelt werden (Ports müssen schon aktiv sein und die zugehörige Hörerliste muß noch Platz haben. Darüber hinausgehende Anforderungen werden abgewiesen).

Eine zweite mögliche Verfahrensweise entspricht prinzipiell der ersten Verfahrensweise, jedoch wird als Anstoß zur Aktivierung die erste Ansageanforderung benutzt. Auch bei dieser Verfahrensweise bleiben einmal aktivierte Ansage-Ports immer aktiv.

Eine dritte mögliche Verfahrensweise entspricht prinzipiell der zweiten Verfahrensweise, jedoch bleiben bei dieser Verfahrensweise die Ansage-Ports nur solange aktiv, wie mindestens noch eine Verbindung zu einem jeweiligen Ansage-Port besteht. Da bei dieser dritten Verfahrensweise im Gegensatz zur ersten und zweiten Verfahrensweise die Ports häufig inaktiv sind, müssen Vorkehrungen getroffen werden (zusätzliche Meldungen), damit nicht unnötig oft Ansageanforderungen abgewiesen werden müssen.

Im folgenden wird die Steuerung der Zuordnung von Ansageanforderungen zu aktiven Ansage-Ports näher erläutert:

Bei Broadcast-Ansagen ohne den erfindungsgemäßen zeitgerechten Einsatz werden die Ansagenanforderungen gleichmäßig auf alle vorhandenen Ansage-Ports mit gleicher Ansage (Ansagebündel) verteilt. Pro Ansagebündel wird vom Koordinationsprozessor ein Zeiger geführt, der bei jeder Anforderung zum jeweils nächsten Ansage-Port weitergeschaltet wird. Ist eine Hörerliste voll, so wird der zugehörige Port aus dem Ansagebündel ausgefädelt.

Bei Broadcast-Ansage mit dem erfindungsgemäßen zeitgerechten Einsatz bleibt der genannte Zeiger solange auf einem Ansage-Port stehen, bis dieser Port in den Sperrzustand geht. Ein Ansage-Port geht dann in den Sperrzustand, wenn der Koordinationsprozessor für diesen Port von der Ansage-Anschlußgruppe die Meldung M:ESa erhält, die den von der Ansage-Anschlußgruppe ausgemessenen absoluten Zeitpunkt ESa enthält. Danach wird die Stellung des Zeigers derart geändert, daß er auf den nächsten Port, der sich nicht im Sperrzustand befindet, bzw. für den die Wartezeit minimal ist, zeigt. Besteht für diesen Ansage-Port z.Zt. keine Verbindung zu Teilnehmern (Hörerliste leer), so erhält der Port das Kommando "Belegen B". Dieses Kommando "Belegen B" an die Ansage-Anschlußgruppe enthält in diesem Fall außerdem den absoluten Zeitpunkt ESa des in der Absucherreihenfolge davorliegenden Ansage-Ports. Das ist gleichzeitig derjenige Zeitpunkt, zu dem die Sammelzeit des neu belegten Ansage-Ports beginnt (Zeitpunkt BSa). Stimmen die beiden genannten absoluten Zeitpunkte ESa und BSa nicht überein, kann die Ansage-Anschlußgruppe die Ansagemaschine des neuen Ansage-Ports in der nächsten Periode resynchronisieren, d. h. den Anfang der Ansage entsprechend verschieben (Anmerkung: Der zeitgerechte Einsatz der Ansagen bleibt auch bei ungünstiger Rasterung erhalten !).

Das Ansagebündel muß mit fester Absucherreihenfolge eingerichtet sein, damit die entstehende Reihenfolge in der Zeitrasterung erhalten bleibt.

Im folgenden werden die Zeitberechnungen in einer Ansage-Anschlußgruppe näher erläutert.
Damit eine Ansage-Anschlußgruppe die Sammel- und Anhörzeiträume richtig steuern kann, müssen ihr die Zeiten t_{A}, t_{SG}, t_{SP}, t_{K} bekannt sein (siehe Figur 2). Die Karenzzeit t_{K} wird als Systemgröße vorgegeben (1 bis 2 Sekunden). Die Gesamtsammelzeit t_{SG} wird über den Koordinationsprozessor administriert und hängt davon ab, wielange die Ansagezeit t_{A} ist und wieviel gleichartige Ansage-Ports zur Verfügung stehen (zeitlicher Versatz der einzelnen Ansagen).

Eine Ansage-Anschlußgruppe muß die Sammelzeit auswerten, um über die obengenannten Meldungen M:ESa und M:BSa die Hörerliste im Koordinationsprozessor sperren und freigeben zu können. Um den absoluten Zeitpunkt BSa zu ermitteln, benötigt die Ansage-Anschlußgruppe die Sperrzeit t_{SP}. Diese Sperrzeit kann berechnet werden aus t_{A}-t_{SG}. Weiterhin muß die Ansage-Anschlußgruppe den Durchschaltezeitpunkt für das Durchschalten der A-Seite ermitteln. Dieser Zeitpunkt wird durch die Bestimmung des Zeitpunkts des Stop-Signals der Ansagemaschine und Addition der Zeiten t_{K} und t_{A} ermittelt.

## Patentansprüche

1. Verfahren zum gleichzeitigen Vermitteln einer Ansage an Teilnehmer eines Kommunikationssystems, dadurch gekennzeichnet, daß
a) eine Verbindungsanforderung eines Teilnehmers zu einer Ansage, die über mehrere Ansage-Ports gesendet wird, demjenigen Ansage-Port zugeordnet wird, in dessen Sammelzeitraum die Verbindungsanforderung fällt, wobei unter Sammelzeitraum eines Ansage-Ports ein Zeitraum vor dem Start der Ansage über diesen Ansage-Port verstanden wird,
b) nach Ablauf des Sammelzeitraums eines Ansage-Ports die diesbezüglich gesammelten Verbindungsanforderungen zu diesem Ansage-Port durchgeschaltet werden,
c) der Start der genannten Ansage auf den genannten Ansage-Ports zeitlich versetzt durchgeführt wird.

2. Verfahren nach Anspruch 1,
**dadurch gekennzeichnet, daß**
das Bestimmen der Länge des Sammelzeitraums durch das Kommunikationssystem in Abhängigkeit von der Anzahl der Ansage-ports für eine bestimmte Ansage und von der Ansagedauer durchgeführt wird.

3. Verfahren nach einem der Ansprüche 1 bis 2,
**dadurch gekennzeichnet, daß**
die Sammelzeiträume der Ansage-Ports einer bestimmten Ansage
durch das Kommunikationssystem derart festgelegt werden, daß sie sich zeitlich nicht überschneiden.

4. Verfahren nach einem der Ansprüche 1 bis 3,
**dadurch gekennzeichnet, daß**
bei Erreichen einer bestimmten Höchstzahl von während der Sammelzeit eines Ansage-Ports gesammelten Verbindungsanforderungen für weitere Verbindungsanforderungen zu derselben Ansage derjenige Ansage-Port mit der nächstfolgenden Sammelzeit ausgewählt wird.

5. Verfahren nach einem der Ansprüche 1 bis 4,
**dadurch gekennzeichnet, daß**
den anfordernden Teilnehmern während des Sammelzeitraums ein Ton durchgeschaltet wird.

6. Verfahren nach einem der Ansprüche 1 bis 5 innerhalb eines Kommunikationssystems mit
a) einem zentralen Koppelnetz (SN), das von einem Koordinationsprozessor (CP) zentral gesteuert wird,
b) mehreren Anschlußgruppen (LTG), die die Schnittstellen von Teilnehmer-Ports, Verbindungs-Ports und Service-Ports zu den Kanälen des zentralen Koppelnetzes bilden und die jeweils von einem Gruppenprozessor (GP) gesteuert werden,
demgemäß
c) die Durchschaltung der Verbindungsanforderung zu demjenigen Kanal des zentralen Koppelnetzes, über den die Ansage durchgeschaltet ist, von dem A-seitigen Gruppenprozessor selbständig bewirkt wird,
d) dem Gruppenprozessor hierzu der zu einer Ansageanforderung ermittelte Durchschaltzeitpunkt (ESa) zu einem gemeinsamen Ansage-Port vom Koordinationsprozessor mitgeteilt wird.

## Claims

1. Method for simultaneously switching an announcement to subscribers in a communications system,
characterized in that
a) a connection request from a subscriber for an announcement which is sent via a number of announcement ports is allocated- to that announcement port in whose collection time period the connection request occurs, with the term collection time period of an announcement port meaning a time period before the start of the announcement via this announcement port,
b) once the collection time period of an announcement port has elapsed, the connection requests collected with regard to this are passed through to this announcement port,
c) the start of the said announcement is carried out at the said announcement ports with a time delay.

2. Method according to Claim 1,
characterized in that
the length of the collection time period is determined by the communications system as a function of the number of announcement ports for a specific announcement, and as a function of the announcement duration.

3. Method according to one of Claims 1 or 2,
characterized in that
the collection time periods of the announcement ports for a specific announcement are defined by the communications system in such a way that they do not overlap in time.

4. Method according to one of Claims 1 to 3,
characterized in that,
on reaching a specific maximum number of connection requests collected during the collection time of an announcement port, that announcement port with the next subsequent collection time is selected for further connection requests relating to the same announcement.

5. Method according to one of Claims 1 to 4,
characterized in that
a tone is passed to the requesting subscribers during the collection time period.

6. Method according to one of Claims 1 to 5 within a communications system having
a) a central switching network (SN) which is controlled centrally by a co-ordination processor (CP),
b) a number of line trunk groups (LTG) which form the interfaces of subscriber ports, connection ports and service ports to the channels of the central switching network and which are each controlled by a group processor (GP)
on the basis of which
c) the connection request is passed automatically from the A-end group processor to that channel of the central switching network via which the announcement is passed,
d) for this purpose, the switching time (ESa), determined for an announcement request, relating to a common announcement port is passed on from the co-ordination processor to the group processor.

## Revendications

1. Méthode pour transmettre une annonce simultanément à des abonnés d'un système de communication
**caractérisée par le fait**
a) qu'une demande de communication d'un abonné vers une annonce, qui est émise par plusieurs portes d'annonces, est affectée à la porte d'annonces dans la période de regroupement de laquelle la demande de communication arrive, la période de regroupement d'une porte d'annonces étant une période qui précède le début de l'émission de l'annonce à travers cette porte,
b) que, à la fin de la période de regroupement d'une porte d'annonces, les demandes de communication regroupées dans ce but sont connectées sur cette porte d'annonces,
c) que le début de la dite annonce sur les dites portes d'annonces est décalé dans le temps.

2. Méthode selon la revendication 1
**caractérisée par le fait**
que la détermination de la longueur de la période de regroupement est effectuée par le système de communication en fonction du nombre de portes d'annonces pour une annonce déterminée et de la durée de l'annonce.

3. Méthode selon l'une des revendications 1 à 2
**caractérisée par le fait**
que les périodes de regroupement des portes d'annonces pour une annonce déterminée sont définies par le système de communication de telle sorte qu'elles ne se chevauchent pas dans le temps.

4. Méthode selon l'une des revendications 1 à 3
**caractérisée par le fait**
que, lorsqu'un nombre maximum déterminé de demandes de communication, regroupées pendant la période de regroupement d'une porte d'annonces, est atteint, les autres demandes de communication vers la même annonce sont orientées vers la porte d'annonces dont la période de regroupement suit immédiatement.

5. Méthode selon l'une des revendications 1 à 4
**caractérisée par le fait**
qu'une tonalité est transmise, pendant la période de regroupement, aux abonnés qui ont fait une demande.

6. Méthode selon l'une des revendications 1 à 5 dans un système de communication avec
a) un réseau centralisé de connexion (SN), qui est contrôlé d'une façon centralisée par un processeur de coordination (CP),
b) plusieurs groupes de raccordement (LTG), qui forment les interfaces de portes d'abonnés, de portes de jonctions et de portes de service vers les canaux du réseau centralisé de connexion et qui sont chacun contrôlés par un processeur de groupe (GP),
en conséquence
c) la connexion de la demande de communication vers le canal du réseau centralisé de connexion, par l'intermédiaire duquel l'annonce est connectée, est effectuée automatiquement par le processeur de groupe du côté A,
d) l'instant de connexion (ESa) sur une porte commune d'annonces, défini pour une demande d'annonce, est communiqué au processeur de groupe par le processeur de coordination.
